# EUROPEAN PATENT APPLICATION

(11) **EP 0 572 938 A1**
(43) Date of publication of application: **08.12.1993**
(21) Application number: 93108654.0
(22) Date of filing: 28.05.1993
(51) Int. Cl.: F16K 27/04, F16K 11/074

(54) **External faucet unit, in particular for bathtubs, showers or washbasins**

(30) Priority: 01.06.1992 IT MN920017
(71) Applicant: AMFAG S.r.l., I-46042 Castelgoffredo (Mantova) (IT)
(72) Inventor: Bosio, Orlando, I-46040 Casaloldo, Mantova (IT)
(74) Representative: Modiano, Guido, Dr.-Ing.

(57) **Abstract**

Wall-mounted or rim-mounted external faucet unit including a cavity for accommodating a mixer cartridge which is shaped like a well with a cylindrical side wall (2) and a substantially flat base (3). The cavity is provided, on its side wall, with inflow openings (4,5) for inflow ducts (4a,5a) for hot and cold water respectively and is furthermore provided with at least one outflow opening (6) for hot, cold or mixed water.

## Description

The present invention relates to a wall-mounted or rim-mounted external faucet unit, for example for bathtubs, showers or washbasins.

It is known that hot, cold or mixed water is often supplied to different devices, such as for example bathtubs, showers or washbasins, by means of external units comprising a cavity for accommodating a single-control mixer cartridge capable of dispensing water with flow-rates which can vary from zero to a maximum value and with the required temperature.

These external units comprise two ducts which respectively convey hot and cold water to the cartridge accommodation cavity, drawing said water, by means of appropriate connectors, from pipes which can be contained within a wall or protrude from the rim of the device to be supplied, respectively forming a wall-mounted external unit and a rim-mounted external unit; said units furthermore comprise one or more ducts for the outflow of hot, cold or mixed water.

The embodiments of known external units are complicated, especially due to the presence of interspaces at the base of the mixer cartridge accommodation cavity; these units must therefore be manufactured by casting, and in particular according to particularly expensive processes due to the need to use multiple cores.

The fluid-dynamic characteristics of known units are furthermore not optimum due to the presence of rather convoluted water passages.

A principal object of the present invention is to provide a wall-mounted or rim-mounted external unit, for example for bathtubs, showers or washbasins, having a very simple shape, so that it can be manufactured very easily and so that it offers excellent functional fluid-dynamic characteristics.

With the foregoing and other objects in view, there is provided, in accordance with the present invention, a wall-mounted or rim-mounted external unit, for example for bathtubs, showers or washbasins, characterized in that it comprises a cavity for accommodating a single-control mixer cartridge for hot and cold water which is shaped like a well with a cylindrical side wall and a substantially flat base provided with holes for accommodating registration pins, which is provided with outflow openings of inflow ducts for hot and cold water respectively at the side wall and is furthermore provided with at least one outflow opening for hot, cold or mixed water.

Further characteristics and advantages of the present invention will become apparent from the following description of some preferred but not exclusive embodiments thereof, illustrated only by way of non-limitative example in the accompanying drawings, wherein:
figure 1 is a perspective view of a unit with a single outflow opening comprised within the front portion of a band of the side wall of the well which is proximate to the base and also comprises the inflow openings for hot and cold water respectively;
figure 2 is a perspective view of a unit with a single outflow opening comprised within the base of the well;
figure 3 is a perspective view of a unit with a single outflow opening comprised within the rear portion of a band of the side wall which is proximate to the base of the well and also comprises the inflow openings for hot and cold water respectively;
figures 4, 5 and 6 are perspective views of units provided with outflow openings which constitute combinations of two of the outflow openings comprised in the units shown in figures 1, 2 and 3;
figures 7 and 8 are views of two units in which a single outflow opening is comprised within a respectively front and rear portion of a band of the side wall of the well which lies above the inflow openings for hot and cold water respectively;
figure 9 is a view of a unit which comprises two outflow openings such as those present in the units shown in figures 7 and 8.

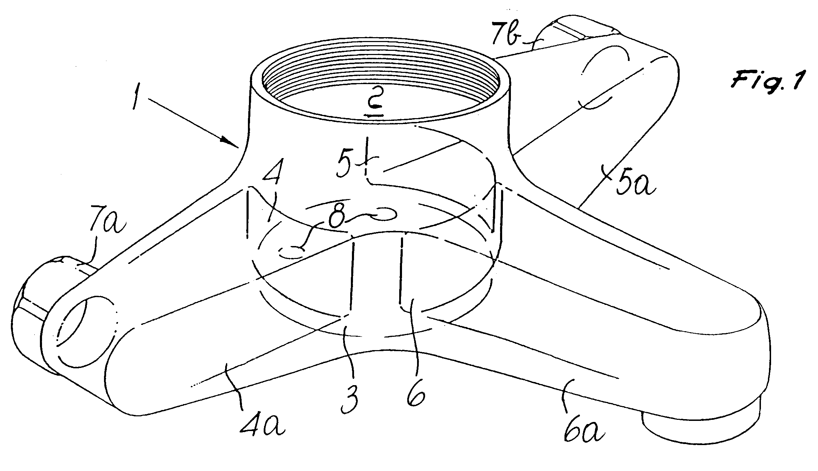

With reference to the above figure 1, the reference numeral 1 generally designates an external faucet unit comprising a cavity for accommodating a single-control mixer cartridge, for example of the type provided with the device for the separate inflow of hot and cold water described and claimed in Italian patent application No. MN92A000015, the disclosure of which is incorporated herein by reference.

In this unit, the cavity for accommodating said cartridge is constituted by a well, which is shaped so as to form a side wall 2 with a flat base 3, and the reference numerals 4 and 5 designate the openings of the inflow ducts 4a and 5a for hot and cold water respectively that lead into the well.

The reference numeral 6 furthermore designates the opening for the outflow of hot, cold or mixed water from the well; said opening is connected to the duct 6a and is formed within the side wall 2 at a region hereinafter termed front region since it is opposite to the connectors 7a and 7b for drawing hot and cold water; the portion of the side wall 2 directed toward said connectors is hereinafter termed rear portion.

In the unit designated by the reference numeral 1, it should be noted that the openings 4, 5 and 6 are all contained within a same band of the side wall 2 which is proximate to the base 3 of the well.

At the base of the well, the unit 1 is provided with the holes 8 for accommodating registration pins extending from the mixer cartridge for the correct placement thereof; similar holes are provided, although not shown in the figures, in all the units described hereinafter.

It is immediately evident that the invention has an extremely simple structure, which is obtainable for example with a casting process entailing the use of a single core, as opposed to the two or three cores required to produce known external units, with easily imaginable cost savings.

It should furthermore be added that the unit according to the present invention is also suitable for being manufactured with a monolithic pressing process and with subsequent simple machine-tool treatments, and this fact is particularly important since it allows to abandon a process such as casting, which encounters increasingly significant obstacles of all kinds for its execution, in favor of an assuredly more agreeable process, such as pressing.

Furthermore, one should not neglect the fact that the very simple shape of the unit according to the present invention allows to provide water paths which are very convenient from the point of view of fluid dynamics.

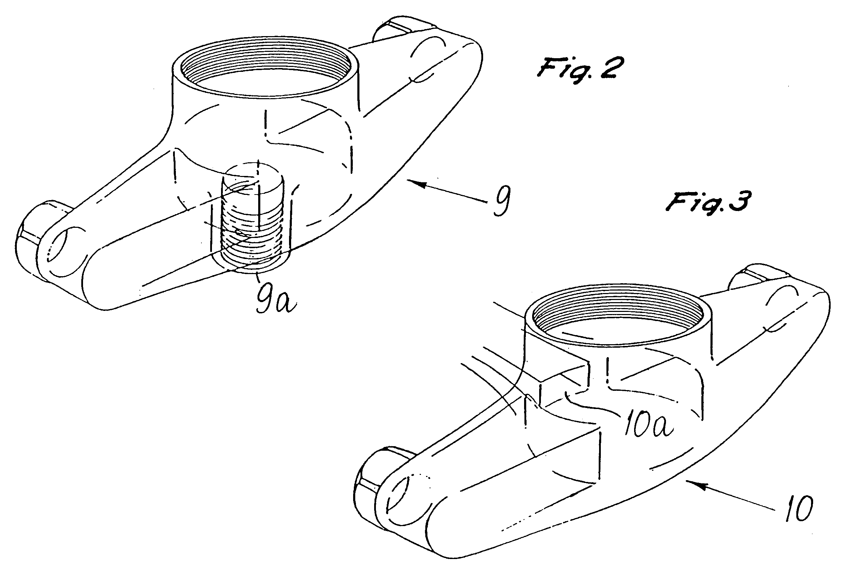

The advantageous characteristics described with reference to the unit designated by the reference numeral 1 obviously also apply to the units which will now be described with reference to figures 2 to 9.

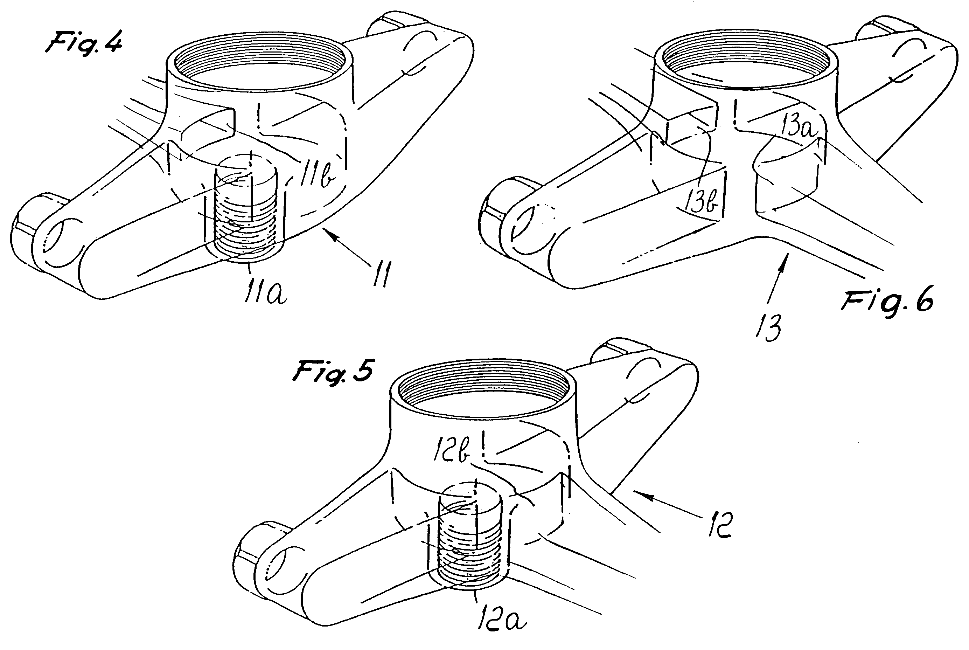

Figures 2 and 3 illustrate two units 9 and 10, each of which comprises a single outflow opening for hot, cold or mixed water; they differ from the unit designated by the reference numeral 1 merely in that said opening is respectively comprised in the base of the well and designated by the reference numeral 9a in the unit 9, and comprised in the rear portion of the side wall of the well and designated by the reference numeral 10a in the unit 10.

Figures 4, 5 and 6 illustrate three units 11, 12 and 13 which comprise combinations of two outflow openings such as those present in the units described above, maintaining the presence of hot and cold water inflow openings of the type present in said units; thus, the unit 11 is provided with the outflow openings 11a and 11b respectively in the base of the well and in the rear portion of the side wall thereof; the unit 12 is provided with the outflow openings 12a and 12b respectively in the base of the well and in the front portion of the side wall thereof; and the unit 13 is provided with the outflow openings 13a and 13b respectively at the front portion and at the rear portion of the side wall of the well.

In all of the above described units, all the inflow and outflow openings present in the side wall of the well are comprised within a band which is proximate to the base of said well, as specified with regard to the unit 1.

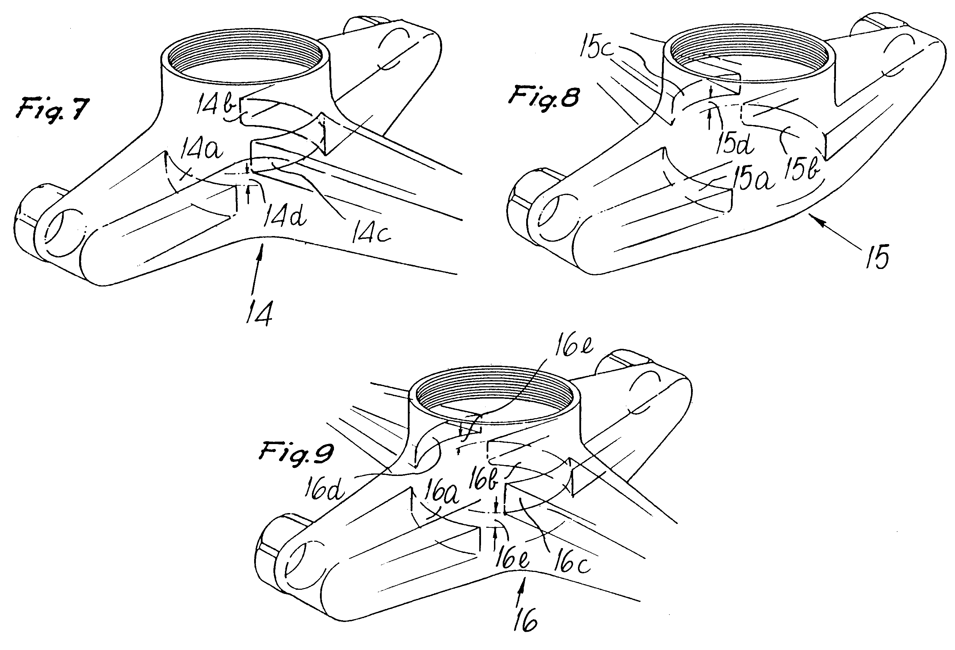

This is not the case in the units 14, 15 and 16 shown in figures 7, 8 and 9, since in these units, which are suitable for accommodating for example a mixer cartridge provided with a supplemental device of the type described and claimed in the Italian patent application No. MN92A000016, the disclosure of which is incorporated herein by reference, the inflow openings for hot and cold water respectively are contained within a first band of the side wall which is proximate to the base of the well, whereas at least one outflow opening for hot, cold or mixed water is contained within a second band which lies above the first band and is separated therefrom by a third continuous band.

In particular, in the unit 14 the reference numerals 14a and 14b designate the inflow openings comprised within the first band of the side wall which is proximate to the base of the well, and the reference numeral 14c designates the front outflow opening comprised within the second band, which lies above the first one and is separated therefrom by means of the continuous band 14d; in the unit 15, the reference numerals 15a and 15b designate the inflow openings comprised within the first band of the side wall which is proximate to the base of the well, and the reference numeral 15c designates the rear outflow opening comprised within the second band, which lies above the first one and is separated therefrom by means of the continuous band 15d; in the unit 16, the reference numerals 16a and 16b designate the inflow openings comprised within the first band of the side wall which is proximate to the base of the well and the reference numerals 16c and 16d respectively designate the front and rear outflow openings comprised within the second band, which lies above the first one and is separated therefrom by means of the continuous band 16e.

The described invention is susceptible to numerous modifications and variations in addition to those described, all of which are within the scope of the inventive concept: thus, for example, the inflow and outflow openings may be arranged in any manner, both within the side wall and within the base of the well; furthermore, there may be a unit provided simultaneously with all three of the outflow openings for hot, cold or mixed water present in the units shown in figures 1, 2 and 3.

In the practical embodiment of the invention, all the details may be replaced with other technically equivalent elements; furthermore, the materials employed, as well as the shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. External faucet unit, in particular wall-mounted or rim-mounted, for example for bathtubs, showers or washbasins, characterized in that it comprises a cavity for accommodating a single-control mixer cartridge for hot and cold water which is shaped like a well with a cylindrical side wall (2) and a substantially flat base (3) provided with holes (8) for accommodating registration pins, which is provided with inflow openings (4,5;14a,14b;15a,15b;16a,16b) for inflow ducts (4a,5a) for hot and cold water respectively at the side wall and is furthermore provided with at least one outflow opening (6; 9a; 10a; 11a,11b; 12a,12b; 13a,13b; 14c; 15c; 16c,16d) for hot, cold or mixed water.

2. Unit according to claim 1, characterized in that the inflow openings for hot and cold water respectively and the at least one outflow opening for hot, cold or mixed water are all comprised within a band of the side wall which is proximate to the base of the well.

3. Unit according to one or more of the preceding claims, characterized in that it comprises inflow openings, for hot and cold water respectively, and an outflow opening for hot, cold or mixed water at a front portion of the side wall of the well, all of said openings being comprised within a band of said side wall which is proximate to the base of the well.

4. Unit according to one or more of the preceding claims, characterized in that it comprises inflow openings, for hot and cold water respectively, and an outflow opening for hot, cold or mixed water at a rear portion of the side wall of the well, all of said openings being comprised within a band of said side wall which is proximate to the base of the well.

5. Unit according to one or more of the preceding claims, characterized in that it comprises inflow openings, for hot and cold water respectively, and two outflow openings for hot, cold or mixed water respectively at a front portion and at a rear portion of the side wall of the well, all of said openings being comprised within a band of said side wall which is proximate to the base of the well.

6. Unit according to one or more of the preceding claims, characterized in that it comprises inflow openings, for hot and cold water respectively, at the side wall of the well, and an outflow opening for hot, cold or mixed water at the base of said well.

7. Unit according to one or more of the preceding claims, characterized in that it comprises inflow openings, for hot and cold water respectively, at the side wall of the well, and two outflow openings for hot, cold or mixed water respectively at the base of the well and at a front portion of the side wall of said well.

8. Unit according to one or more of the preceding claims, characterized in that it comprises inflow openings, for hot and cold water respectively, at the side wall of the well, and two outflow openings for hot, cold or mixed water respectively at the base of the well and at a rear portion of the side wall thereof.

9. Unit according to one or more of the preceding claims, characterized in that it comprises inflow openings, for hot and cold water respectively, at a first band of the side wall of the well which is proximate to the base thereof, and at least one outflow opening for hot, cold or mixed water at a second band of the side wall which lies above said first band and is separated therefrom by means of a third continuous band.

10. Unit according to one or more of the preceding claims, characterized in that it comprises inflow openings, for hot and cold water respectively, at a first band of the side wall of the well which is proximate to the base thereof, and an outflow opening for hot, cold or mixed water at the front portion of a second band of the side wall which lies above said first band and is separated therefrom by means of a third continuous band.

11. Unit according to one or more of the preceding claims, characterized in that it comprises inflow openings, for hot and cold water respectively, at a first band of the side wall of the well proximate to the base thereof, and an outflow opening for hot, cold or mixed water at the rear portion of a second band of the side wall which lies above said first band and is separated therefrom by means of a third continuous band.

12. Unit according to one or more of the preceding claims, characterized in that it comprises inflow openings, for hot and cold water respectively, at a first band of the side wall of the well which is proximate to the base thereof, and two outflow openings for hot, cold or mixed water respectively at the front and rear portions of a second band of the side wall which lies above said first band and is separated therefrom by means of a third continuous band.

13. Unit according to one or more of the preceding claims, characterized in that it comprises inflow openings, for hot and cold water respectively, at the side wall of the well, and three outflow openings for hot, cold or mixed water respectively at the front portion and at the rear portion of the side wall of said well, and at the base of said well.
